# EUROPEAN PATENT APPLICATION

(11) **EP 2 610 953 A1**
(43) Date of publication of application: **03.07.2013**
(21) Application number: 12199391.9
(22) Date of filing: 27.12.2012
(51) Int. Cl.: H01M 4/88, H01M 4/90, H01M 8/02, H01M 8/12

(54) **Solid oxide fuel battery cell**

(30) Priority: 29.12.2011 JP 2011290309
(71) Applicant: Toto Ltd., Fukuoka 802-8601 (JP)
(72) Inventor: Niimi, Hiroshi, Kitakyushu-shi, Fukuoka 8028601 (JP); Kawakami, Akira, Kitakyushu-shi, Fukuoka 8028601 (JP); Ando, Shigeru, Kitakyushu-shi, Fukuoka 8028601 (JP); Yuzurihara, Masayoshi, Kitakyushu-shi, Fukuoka 8028601 (JP); Nishimizu, Ryoichi, Kitakyushu-shi, Fukuoka 8028601 (JP)
(74) Representative: ABG Patentes, S.L.

(57) **Abstract**

There is provided a solid oxide fuel battery cell that has a high initial power generation performance and a good power generation durability while ensuring adhesion between an air electrode layer and a current collector layer. The solid oxide fuel battery cell includes at least a solid electrolyte, a fuel electrode layer provided on one surface side of the solid electrolyte, an air electrode layer provided on the other surface side of the solid electrolyte, and a current collector layer provided on the surface of the air electrode layer, wherein the air electrode layer is formed of an oxide selected from the group consisting of lanthanum ferrite perovskite oxides, lanthanum cobalt perovskite oxides, and samarium cobalt perovskite oxides, and the current collector layer is a porous layer including silver, palladium, and an oxide and has an average porosity of 20% to 70% in a portion other than a portion near a boundary between the current collector layer and the air electrode layer and, in the near-boundary portion, an average porosity of not less than 50% of the average porosity of the portion other than the near-boundary portion.

## Description

### Field of Invention

The present invention relates to a solid oxide fuel battery cell and a fuel battery system including the same.

### Background Art

A fuel battery including tubular fuel battery cells has hitherto been known (see, for example, JP 2007-95442 (PTL 1)). The knonw solid oxide fuel battery cell includes an air electrode coated with a silver paste, and the silver is exposed to air.

Further, JP 2005-50636 (PTL 2) describes a flat solid oxide fuel battery cell in which an air electrode contact material on the inner side of the solid oxide fuel battery cell is held between a separator and an air electrode. The air electrode contact material includes at least a silver powder or a silver alloy powder and a perovskite oxide powder. The mixing ratio between the silver powder or the silver alloy powder and the perovskite oxide powder is preferably silver powder or silver alloy powder : perovskite oxide powder is 90:10 in terms of % by weight to 30:70 in terms of % by weight, more preferably silver powder or silver alloy powder : perovskite oxide powder is 70:30 in terms of % by weight to 50:50 in terms of % by weight. The claimed advantage of the air electrode contact material is that, without significantly sacrificing a power generation performance inherent in unit cells, an excellent power generation performance under an air environment can be realized and breaking of unit cells can also be suppressed.

According to finding obtained by some of the present inventors, however, when the air electrode contact material described in this prior art, that is, a composition including at least a silver powder or a silver alloy powder and a perovskite oxide powder, is applied to a current collector part in the solid oxide fuel battery, the addition amount of the perovskite oxide is so large that the electric resistance is increased and the power generation performance is low. Further, when the content of the perovskite oxide powder is lowered, the porous nature of the air electrode contact layer is lost. In this case, the power generation performance under an air atmosphere is lowered, and, further, unit cells are likely to be broken by sticking. The loss of the porous nature of the air electrode contact layer further brings about a tendency toward a lowering in power generation durability.

Furthermore, JP 2002-216807 (PTL 3) describes a flat solid oxide fuel battery cell. An air electrode current collector provided on the inner side of the solid oxide fuel battery cell is held between a separator and an air electrode. The air electrode current collector in the solid oxide fuel battery cell is formed of a dispersion-strengthening type silver porous body including an oxide dispersed in a silver base. The prior art, however, does not disclose an air electrode current collector containing silver and palladium and a perovskite oxide at a specific content ratio.

Some of the present inventors have previously proposed, in JP 2009-289657 (PTL 4), a solid oxide fuel battery cell including silver-and palladium-containing current collector portion on an air electrode. This cell has a high level of adhesion between the current collector portion and the air electrode. Further, JP 2010-118338 (PTL 5) and JP 2010-140895 (PTL 6) disclose that, when a current collector layer on an air electrode contains silver, palladium, and a perovskite oxide at a specific ratio and is constructed as a porous layer, in addition to the adhesion between the current collector portion and the air electrode, good power generation performance and durability can be realized.

### Patent Literature:

[PTL 1] JP 2007-95442
[PTL 2] JP 2005-50636
[PTL 3] JP 2002-216807
[PTL 4] JP 2009-289657
[PTL 5] JP 2010-118338
[PTL 6] JP 2010-140895

### SUMMARY OF THE INVENTION

The present inventors have made studies on a current collector layer on the air electrode in the solid oxide fuel battery cells disclosed in PTLs 5 and 6 and, as a result, have confirmed a phenomenon that, in the manufacturing process, the current collector layer forms a thin dense layer near a boundary between the current collector layer and the air electrode layer and the dense layer loses its air permeability with the elapse of power generation operation time. Further, the present inventors have found that forming the current collector layer without forming the dense layer can contribute to improved power generation durability of the solid oxide fuel battery cell and that the adhesion between the air electrode layer and the current collector layer can be ensured without providing the dense layer.

Accordingly, an object of the present invention is to provide a solid oxide fuel battery cell that has a high initial power generation performance and a good power generation durability while ensuring the adhesion between an air electrode layer and a current collector layer.

According to the present invention, there is provided a solid oxide fuel battery cell comprising at least a solid electrolyte, a fuel electrode layer provided on one surface side of the solid electrolyte, an air electrode layer provided on the other surface side of the solid electrolyte, and a current collector layer provided on the surface of the air electrode layer, wherein the air electrode layer is formed of an oxide selected from the group consisting of lanthanum ferrite perovskite oxides, lanthanum cobalt perovskite oxides, and samarium cobalt perovskite oxides, and the current collector layer is a porous layer comprising silver, palladium and an oxide where the current collector layer has, in a portion other than a portion near a boundary between the current collector layer and the air electrode layer, an average porosity of 20% to 70% and has, in the near-boundary portion, an average porosity which is 50% or more of the value of the average porosity.

The present invention can provide a solid oxide fuel battery cell that has a high initial power generation performance and a good power generation durability while ensuring the adhesion between an air electrode layer and a current collector layer.

### BRIEF DESCRIPTION OF THE DRAWINGS

**Fig. 1** is a scanning electron microscope (SEM) photograph of a solid oxide fuel battery cell according to the present invention in its portion near a boundary between a current collector layer and an air electrode layer.
**Fig. 2** is a scanning electron microscope (SEM) photograph of a solid oxide fuel battery cell in its portion near a boundary between a current collector layer and an air electrode layer, described in PTL 5 or 6.
**Fig. 3** is a diagram showing a solid oxide fuel battery cell in one embodiment of the present invention.

### DESCRIPTION OF EMBODIMENTS

The fuel battery cell according to the present invention is the same as a fuel battery cell that includes at least a fuel electrode, an electrolyte, and an air electrode and is usually classified or understood as a solid oxide fuel battery cell in the art, except that a current collector layer provided on the air electrode satisfies requirements that will be described later. Further, the fuel battery cell according to the present invention can be used in systems that are understood or will be understood in the future as fuel battery systems in the art.

In the present invention, the current collector layer disposed on the air electrode is a porous layer containing silver, palladium, and an oxide where the current collector layer has, in a portion other than a portion near a boundary between the current collector layer and the air electrode layer, an average porosity of 20% to 70% and has, in the near-boundary portion, an average porosity which is 50% or more of the value of the average porosity. That is, in the present invention, the current collector layer does not have a thin dense layer formed near a boundary between the current collector layer and the air electrode layer and is constructed as a porous layer to the boundary between the current collector layer and the air electrode layer.

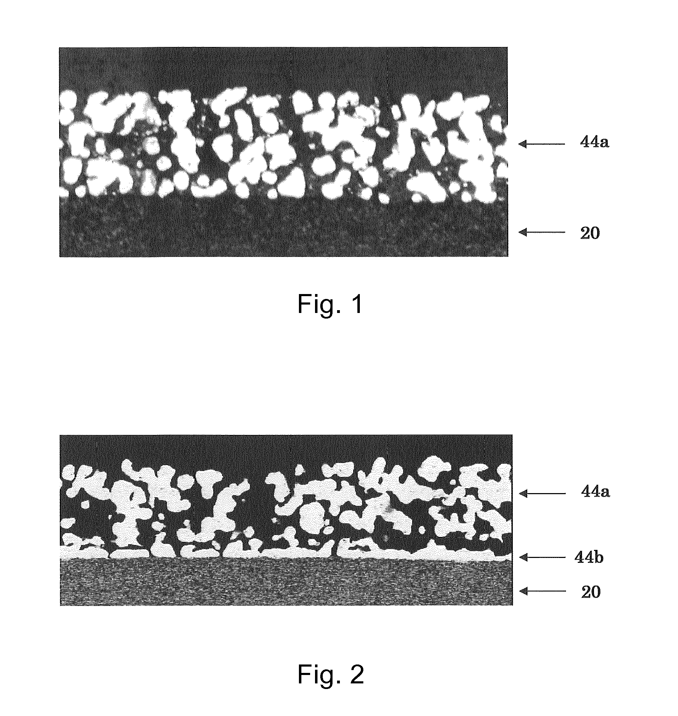

Fig. 1 is a scanning electron microscope (SEM) photograph of a solid oxide fuel battery cell according to the present invention in its portion near a boundary between a current collector layer and an air electrode layer and Fig. 2 is a scanning electron microscope (SEM) photograph of a solid oxide fuel battery cell in its portion near a boundary between a current collector layer and an air electrode layer, described in PTL 5 or 6. In both the drawings, the formation of a porous current collector layer 44a on an air electrode 20 is observed. In the cell according to the present invention, the current collector layer 44a is constructed as a porous layer to a boundary between the current collector layer 44a and the air electrode layer 20. On the other hand, in Fig. 2, a dense layer 44b is present in a portion near the boundary between the current collector layer 44a and the air electrode layer 20, and the porous portion of the current collector layer 44a is interrupted. The dense layer has been considered as ensuring the adhesion between the current collector layer and the air electrode layer but has been confirmed to develop a phenomenon that the dense layer loses its air permeability with the elapse of the power generation operation time. Further, it has been found that, when the solid oxide fuel battery cell is free from the dense layer, the power generation durability is improved and, further, the adhesion between the current collector layer and the air electrode layer can be satisfactorily ensured.

The reason why the dense layer is formed has not been elucidated yet but is considered as follows. It should be however noted that the following description is hypothetical and does not limit the present invention. The current collector layer in the solid oxide fuel battery cell described in PTL 5 or 6 and the current collector layer in the solid oxide fuel battery cell according to the present invention include silver and palladium as conductive metals. The air electrode layer is formed of an oxide selected from the group consisting of lanthanum ferrite perovskite oxides, lanthanum cobalt perovskite oxides, and samarium cobalt perovskite oxides that will be described later. It is considered that, in a process of sintering the current collector layer, palladium is attracted to the air electrode due to good affinity between palladium and the oxide for air electrode layer formation and, at that time, silver is also attracted to the air electrode to form a dense layer of silver at a boundary between the current collector layer and the air electrode. Accordingly, methods considered effective to avoid the formation of the dense layer include, for example, one in which a material that disappears during sintering, for example, resins or carbon particles, is added to allow the current collector layer to be maintained in a porous state even in the sintering process, and one in which a silver powder having such particle diameters that silver is not attracted together with palladium to the air electrode is used, and one in which the content of the oxide in the current collector layer is regulated so that silver resists the movement, together with palladium, toward the air electrode layer.

Further, the reason why the adhesion between the current collector layer and the air electrode layer is ensured without the presence of the dense layer has not also been elucidated yet but is believed to reside in that, due to the affinity between palladium and the oxide for air electrode layer formation, the palladium and the air electrode layer are firmly immobilized to each other even if not dense and, consequently, the adhesion of the current colleting layer can be ensured.

As described above, in the present invention, the current collector layer does not form a thin dense layer at a portion near a boundary between the current collector layer and the air electrode layer and is constructed as a porous layer to the boundary between the current collector layer and the air electrode layer. In the present invention, the current collector layer in its portion near the boundary between the current collector layer and the air electrode layer has an average porosity of not less than 50%, preferably not less than 70%, of the average porosity of a portion other than the near-boundary portion. That is, in the present invention, the expression "the current collector layer in its portion near the boundary between the current collector layer and the air electrode layer has an average porosity of not less than 50% of the average porosity of a portion other than the near-boundary portion" is synonymous with the state that the current collector layer is porous to the boundary between the current collector layer and the air electrode layer without the formation of a dense layer at the boundary between the current collector layer and the air electrode layer. In one embodiment of the present invention, the current collector layer in its portion near the boundary between the current collector layer and the air electrode layer means a portion of at least 5 µm in terms of thickness of the current collector layer from the boundary between the current collector layer and the air electrode layer. The present invention embraces an embodiment where the average porosity of the current collector layer in its portion near the boundary between the current collector layer and the air electrode layer is equal to or larger than the average porosity of the current collector layer in its portion other than the near-boundary portion, for example, an embodiment where the average porosity of the current collector layer in its portion near the boundary between the current collector layer and the air electrode layer is about 120% of the average porosity of the current collector layer in its portion other than the near-boundary portion.

As described above, in the present invention, the current collector layer is porous, and air is introduced through the pores for utilization in power generation. The air passed through the current collector layer is supplied into the air electrode, and a good power generation performance is obtained. Further, in the present invention, the electrical conductivity of the current collector layer is higher than that of the air electrode, and, consequently, the power generation performance can be improved. In the present invention, the porosity of the current collector layer when expressed in terms of average porosity of the current collector layer in its portion other than the portion of the current collector layer in its portion near the boundary between the current collector layer and the air electrode layer is 20% to 70%. The lower limit of the average porosity is preferably about 30%, and the upper limit of the average porosity is preferably about 65%. The average porosity can be determined, for example, by embedding a cross section of a sample to be measured with a resin, polishing the assembly, photographing the surface of the cross section of the sample, with a specular surface exposed thereon, with SEM and analyzing the photographed image.

In a preferred embodiment of the present invention, the current collector layer is in contact with the air electrode layer at their boundary over a distance of 20 µm to 85 µm per unit length 100 µm. This means that, preferably, the current collector layer is in contact with and is not in contact with the air electrode layer at their boundary in a given proportion. This distance can be obtained, for example, by embedding a cross section of a sample to be measured with a resin, polishing the assembly, photographing the surface of the cross section of the sample, with a specular surface exposed thereon, with SEM and analyzing the photographed image.

In a preferred embodiment of the present invention, the air electrode layer in its surface in contact with the current collector layer has a roughness of Ra of not less than 0.12 µm. When the surface of the air electrode layer has the above-defined roughness, the air electrode layer and the current collector layer can be firmly immobilized to each other without the formation of the dense layer at the boundary between the current collector layer and the air electrode layer. As a result, the adhesion of the current collector layer can be advantageously ensured.

In the present invention, silver and palladium for constituting the current collector layer may be provided as mutually separate substances or alternatively may be provided as a silver-palladium alloy. In the present invention, the current collector layer contains an oxide in addition to silver and palladium. In a preferred embodiment of the present invention, the oxide is a perovskite oxide, more preferably an oxide having the same composition as the composition of the air electrode. Accordingly, in one preferred embodiment of the present invention, the oxide is selected from the group consisting of lanthanum ferrite perovskite oxides, lanthanum cobalt perovskite oxides, and samarium cobalt perovskite oxides.

In the present invention, the content of palladium in the current collector layer is preferably 0.1% by mass (exclusive) to 10% by mass (exclusive), more preferably 0.1% by mass (exclusive) to 5% by mass, and the content of the oxide in the current collector layer is preferably 0.1% by mass (exclusive) to 10% by mass (exclusive), more preferably 0.1 % by mass (exclusive) to 5% by mass.

The weight ratio of the oxide to silver is preferably 0 (exclusive) to 0.111 (exclusive), more preferably 0 (exclusive) to 0.095, still more preferably 0 (exclusive) to 0.090. This ratio can be determined by an electron beam microanalyzer (EPMA) of the surface or cross section of the current collector layer.

The solid oxide fuel battery cell according to the present invention may be properly manufactured by a publicly known method. The current collector layer disposed on the air electrode may also be formed by an appropriate method similar to a publicly known method but is preferably formed by the following method. At the outset, a silver powder, a palladium powder, and an oxide powder are provided and weighed in a proportion identical to the composition of the final current collector layer. When the silver powder is used, a porous current collector layer is basically formed. In some cases, a material that disappears during sintering may be added as a pore forming material to form a porous current collector layer. Materials that disappear during sintering include carbon particles, resins, for example, urethane resins, acrylic resins, epoxy resins, and phenolic resins. These ingredients are mixed with a solvent to prepare a coating liquid. The coating liquid is coated on the air electrode, and the coating is dried and sintered to form a current collector layer. Solvents include ethanol, methanol, α-terpineol, dihydroterpineol, n-methyl-2-pyrrolidone, benzyl alcohol, toluene, acetonitrile, 2-phenoxyethanol, and their mixtures. The coverage of the coating liquid on the air electrode may be properly determined while taking into consideration the thickness of the final current collector layer. The coating liquid may be coated on the air electrode by slurry coating, tape casting, doctor blading, screen printing, spin coating, spraying, flow coating, roll coating, or a combination thereof. Preferably, the coating is carried out at about 50 to 150°C for 0.5 to 5 hr, and the sintering is carried out at 600 to 900°C for 0.5 to 5 hr.

In a preferred embodiment of the present invention, a silver or silver-palladium alloy powder having a tap density of 1.0 g/cm³ to 5.0 g/cm³ is used to bring the average porosity of the current collector layer in its portion near the boundary between the current collector layer and the air electrode layer to not less than 50% of the average porosity of the current collector layer in its portion other than the portion of the current collector layer near the boundary between the current collector layer and the air electrode layer. It is considered that the silver or silver-palladium alloy powder having a tap density in the above-defined range is less likely to be attracted together with palladium to the air electrode and, consequently, a dense layer is less likely to be formed in a portion near the boundary between the current collector layer and the air electrode layer.

The present invention will be further described with reference to the accompanying drawings. For facilitating understanding of the present invention, like parts are identified with same reference numerals throughout all of the drawings unless otherwise specified.

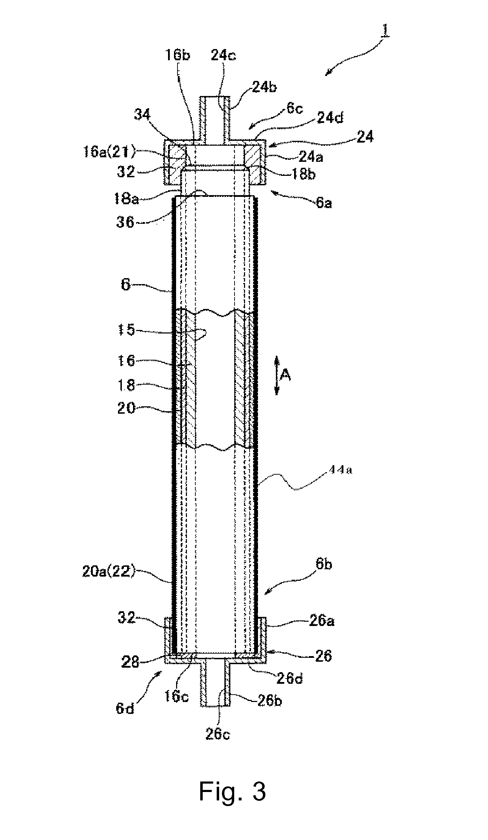

Fig. 3 is a cross-sectional view of a solid oxide fuel battery cell in an embodiment of the present invention.

In Fig. 3, a fuel battery cell unit 1 includes a solid oxide fuel battery cell 6 and a fuel electrode terminal 24 and an air electrode terminal 26 provided at respective both ends of the solid oxide fuel battery cell 6. In this embodiment, the solid oxide fuel battery cell includes one solid oxide fuel battery cell 6 (tubular body), and the solid oxide fuel battery cell 6 is cylindrical.

The solid oxide fuel battery cell 6 has a laminate structure including a current collector layer 44a, an air electrode 20, an electrolyte 18, and a fuel electrode 16 as viewed from the surface of the solid oxide fuel battery cell 6 exposed to an oxidizing agent gas. The solid oxide fuel battery cell 6 has a through-flow passage 15 that is provided on the inner side of the fuel electrode 16 and functions as a passage for a fuel gas. The current collector layer 44a is connected to the air electrode terminal 26 fixed to the other end 6b of the solid oxide fuel battery cell 6. The whole or a part of the air electrode 20 is covered with the current collector layer 44a. Electricity generated in the air electrode 20 flows in a cell axial direction of the current collector layer 44a and is taken out from the air electrode terminal 26. The cell axial direction refers to a direction identical to the direction of the fuel gas that flows through the through-flow passage 15. In the drawing, the cell axial direction is indicated by an arrow A.

On the other hand, the fuel electrode terminal 24 fixed to one end 6a of the solid oxide fuel battery cell 6 is in contact with the fuel electrode 16 and functions to take out electricity generated in the fuel electrode 16.

The current collector layer 44a should satisfy the above construction. In a preferred embodiment of the present invention, the thickness of the current collector layer 44a is 10 to 100 µm, more preferably 30 to 60 µm.

The fuel electrode 16 is formed of, for example, at least one of a mixture of nickel (Ni) with zirconia doped with at least one element selected from calcium (Ca) and rare earth elements such as yttrium (Y) and scandium (Sc), a mixture of Ni with ceria doped with at least one element selected from rare earth elements, and a mixture of Ni with lanthanum gallate doped with at least one element selected from Sr, magnesium (Mg), Co (cobalt), Fe (iron), and Cu (copper).

The electrolyte 18 is formed of, for example, at least one of zirconia doped with at least one element selected from rare earth elements such as Y and Sc, ceria doped with at least one element selected from rare earth elements, and lanthanum gallate doped with at least one element selected from Sr and Mg.

The air electrode 20 is formed of an oxide selected from the group consisting of lanthanum ferrite perovskite oxides, lanthanum cobalt perovskite oxides, and samarium cobalt perovskite oxides.

The thickness of the fuel electrode 16 is generally approximately 1 to 5 mm. The thickness of the electrolyte 18 is generally approximately 1 to 100 µm. The thickness of the air electrode 20 is generally approximately 1 to 50 µm.

A fuel electrode exposed peripheral surface 16a, in which the fuel electrode 16 is exposed to the electrolyte 18 and the air electrode 20, and an electrolyte exposed peripheral surface 18a, in which the electrolyte 18 is exposed to the air electrode 20, are provided on one end 6a of the solid oxide fuel battery cell 6. The fuel electrode exposed peripheral surface 16a and the electrolyte exposed peripheral surface 18a constitute the outer peripheral surface of the solid oxide fuel battery cell 6. In the outer peripheral surface of the remaining part including the other end 6b of the solid oxide fuel battery cell 6, the air electrode 20 is covered with the current collector layer 44a. In this embodiment, the fuel electrode exposed peripheral surface 16a is also a fuel electrode outer peripheral surface 21 connected electrically to the fuel electrode 16.

The fuel electrode terminal 24 includes a body part 24a, which is disposed so as to cover the whole circumference of the fuel electrode outer peripheral surface 21 from the outside of the fuel electrode outer peripheral surface 21 and is connected electrically to the fuel electrode outer peripheral surface 21, and a tubular part 24b, which is extended in a longitudinal direction of the solid oxide fuel battery cell 6 so that a distance from the solid oxide fuel battery cell 6 is increased. Preferably, the body part 24a and the tubular part 24b are cylindrical and are concentrically disposed. The tube diameter of the tubular part 24b is smaller than the tube diameter of the body part 24a. The body part 24a and the tubular part 24b have a connecting flow passage 24c that is in communication with the through-flow passage 15 and is connected to the outside of the solid oxide fuel battery cell unit 1. A step part 24d between the body part 24a and the tubular part 24b is abutted against an end face 16b of the fuel electrode 16.

Further, in this embodiment, the air electrode terminal 26 includes a body part 26a, which is disposed so as to cover the whole circumference of an air electrode outer peripheral surface 22 from the outside of the air electrode outer peripheral surface 22 and is connected electrically to the air electrode outer peripheral surface 22, and a tubular part 26b, which is extended in a longitudinal direction of the solid oxide fuel battery cell 6 so as to increase a distance from the solid oxide fuel battery cell 6. Preferably, the body part 26a and the tubular part 26b are cylindrical and are concentrically disposed. The tube diameter of the tubular part 26b is smaller than the tube diameter of the body part 26a. The body part 26a and the tubular part 26b have a connecting flow passage 26c that is in communication with the through-flow passage 15 and is connected to the outside of the solid oxide fuel battery cell unit 1. A step part 26d between the body part 26a and the tubular part 26b is abutted against the current collector layer 44a, the air electrode 20, electrolyte 18, and an end face 16c of the fuel electrode 16 through an annular insulating member 28.

Preferably, the tubular part 24b in the fuel electrode terminal 24 and the tubular part 26b in the air electrode terminal 26 are identical to each other in the sectional shape of the outer contour. More preferably, the whole shape of the fuel electrode terminal 24 is identical to the whole shape of the air electrode terminal 26. The fuel electrode terminal 24 and the air electrode terminal 26 are formed of a heat resistant metal such as silver, a stainless steel, a nickel base alloy, or a chromium base alloy.

The fuel electrode terminal 24 and the solid oxide fuel battery cell 6 are sealed and fixed over the whole circumference thereof with an electroconductive seal material 32. The air electrode terminal 26 and the fuel battery cell 6 are sealed and fixed over the whole circumference thereof with an electroconductive seal material 32.

In the one end 6a, the fuel electrode exposed peripheral surface 16a and the electrolyte exposed peripheral surface 18a are extended over the whole circumference of the solid oxide fuel battery cell 6 and are adjacent to each other in a longitudinal direction A. Further, the fuel electrode exposed peripheral surface 16a is located at a front end 6c of the solid oxide fuel battery cell 6. A boundary 34 between the fuel electrode exposed peripheral surface 16a and the electrolyte exposed peripheral surface 18a is located within the body part 24a in the fuel electrode terminal 24. A boundary 36 between the electrolyte exposed peripheral surface 18a and the current collector layer exposed peripheral surface 44 is located on the outside of the body part 24a. The electrolyte exposed peripheral surface 18a has a taper part 18b with the thickness thereof being reduced toward the fuel electrode exposed peripheral surface 16a.

In the one end 6a, the seal material 32 lies astride the fuel electrode exposed peripheral surface 16a and the electrolyte exposed peripheral surface 18a, is extended over the whole circumference thereof, is filled into the body part 24a in the fuel electrode terminal 24, and is distant from the air electrode 20 through the electrolyte exposed peripheral surface 18a. In the other end 6b, the seal material 32 is extended on the air electrode exposed peripheral surface 20a over the whole circumference thereof and is filled into a space between the body part 26a in the air electrode terminal 26 and the insulating member 28. The seal material 32 is provided so as to partition an area of gas, which acts on the fuel electrode 16, that is, the through-flow passage 15 and the connecting flow passages 24c, 26c, from an area of gas, which acts on the air electrode 20. Various brazing materials including silver, a mixture of silver with glass, gold, nickel, copper, or titanium are used as the seal material 32.

The principle of operation of the solid oxide fuel battery will be described. When an oxidizing agent gas is allowed to flow into the air electrode while a fuel gas (for example H₂ or CO) is allowed to flow into the fuel electrode, oxygen in the oxidizing agent gas is converted to oxygen ions at a portion around the interface of the air electrode and the solid electrolyte. The oxygen ions are passed through the solid electrolyte and reach the fuel electrode, and the fuel gas is reacted with the oxygen ions to give water and carbon dioxide. These reactions are expressed by formulae (1), (2), and (3). The generated electrons are moved to the air electrode or the fuel electrode and are collected in the terminal. Accordingly, electricity flows in the longitudinal direction of the tubular cell. The electricity can be taken out to the outside of the fuel battery cell unit 1 by connecting the air electrode and the fuel electrode with an external circuit.

H2 + O²⁻ → H₂O + 2e⁻ (1)

CO + O²- → CO₂ + 2e⁻ (2)

1/2 O₂ + 2e⁻ --+ → O²⁻ (3)

More specifically, in Fig. 3, gas (fuel gas), which acts on the fuel electrode 16, is passed into the through-flow passage 15 and the connecting flow passages 24c, 26c. On the other hand, gas (oxidizing agent gas), which acts on the air electrode 20, is allowed to flow around the air electrode 20. Thus, the solid oxide fuel battery cell 6 is activated. Electricity in the fuel electrode 16 is taken out through the seal material 32 and the fuel electrode terminal 24, and electricity in the air electrode 20 is taken out through the seal material 32 and the air electrode terminal 26.

In the present invention, the shape of the solid oxide fuel battery cell is not limited to a cylindrical shape and may have a flat shape or the like.

### EXAMPLES

The following measuring methods and evaluation methods were used in the following Examples.

### Measurement of average porosity

The average porosity of the current collector layer in its portion near a boundary between the current collector layer and the air electrode layer and the average porosity of the current collector layer in its portion other than the near-boundary portion were evaluated by the following method. At the outset, the cell was cut, and the sample was embedded with a resin so that the cross-sectional direction can be observed under SEM (scanning electron microscope), followed by mechanical polishing. The cross section of the polished sample was polished until a mirror surface appeared. The sample was vapor-deposited with Pt (platinum). The polished sample was observed at a magnification of 500 times. Five-visual field observation was adopted from the viewpoint of understanding a structure-derived variation of the sample. Here a portion of 5 µm in terms of thickness of the current collector layer from the air electrode side, as determined by SEM observation of the cross section, was used as the portion near the boundary between the current collector layer and the air electrode layer. Further, the current collector layer in its portion other than the portion near the boundary between the current collector layer and the air electrode layer was a portion obtained by removing the 5 µm from the whole thickness of the current collector layer. SEM observation images were analyzed with a commercially available two-dimensional image analysis software "Win Roof" to digitize pores. The values obtained in the five visual fields were averaged to determine the average porosity.

The cell used in the evacuation of the average porosity was one that was obtained by providing a current collector layer by sintering on the outer side of the air electrode and had not been used yet in power generation. After the provision of the current collector layer by sintering, the average porosity was measured in an initial state, that is, in such a state that the cell was never used in power generation.

### Measurement of distance of contact between air electrode layer and current collector layer per unit length 100 µm

SEM observation images obtained for the average porosity measurement was analyzed with a commercially available two-dimensional image analysis software "Win Roof" to measure a distance of contact.

### Measurement of tap density

The tap density of a silver starting material powder was measured by a method for the determination of tap density for metallic powders specified in JIS (Japanese Industrial Standards) Z 2512.

### Measurement of surface roughness Ra of air electrode

The roughness of the surface of the air electrode was measured under a laser microscope OLS4000 manufactured by Olympus. The measurement was made in a non-contact manner by laser beams, and Ra in a measurement length of 10 mm according to JIS 1994 was measured. The sample was observed at a magnification of 50 times. Five-visual field observation was adopted from the viewpoint of understanding a structure-derived variation of the sample. The values obtained in the five visual fields were averaged to determine the surface roughness Ra of the air electrode.

### Power generation test of solid oxide fuel battery cell

Power generation tests were performed using solid oxide fuel battery cells (effective area of electrode: 35.0 cm²) obtained in the following Examples. For current collection of the fuel electrode side, a silver wire was wound around the fuel electrode terminal. For current collection of the air electrode side, a silver wire was wound around the air electrode terminal. A mixed gas composed of (H₂ + 3% H₂O) and N₂ was used as a fuel gas. The utilization rate of fuel was 75%. Air was used as an oxidizing agent gas. The power generation potential was measured under conditions of a measuring temperature of 700°C and a current density of 0.2 A/cm². The initial potential of the cell was expressed as an initial potential in the table.

### Evaluation on power generation durability of solid oxide fuel battery cell

Power generation durability was evaluated in the same manner as in the power generation test. A mixed gas composed of H₂ and N₂ was used as a fuel. The utilization rate of fuel was 75%. Air was used as an oxidizing agent gas. The power generation potential was measured under conditions of a measuring temperature of 700°C and a current density of 0.2 A/cm². The percentage change of power generation potential from the initial power generation potential was determined as a percentage potential lowering. The percentage potential lowering after a 1000-hr durability test exhibits a power generation performance retention of the solid oxide fuel battery cell. The lower the percentage potential lowering, the better the solid oxide fuel battery cell performance. In the table, the percentage potential lowering was expressed as durability.

### Evaluation of adhesion

A commercially available cellophane pressure-sensitive adhesive tape was applied to a semiperimeter of the solid oxide fuel battery cells so that air bubbles are not introduced into between the solid oxide fuel battery cell and the pressure-sensitive adhesive tape. The tape was pulled in a direction perpendicular to the cell surface to separate the tape. At that time, whether or not the current collector layer remained unremoved on the surface of the cell was visually determined. The above procedure was repeated five times at respectively different positions. The number of times of separation of the current collector layer together with the cellophane tape was described in the table.

### Cell Production: Examples 1 to 58

A fuel electrode support was prepared by mixing NiO and 10YSZ (10mol% Y₂O₃-90mol% ZrO₂) were mixed together at a weight ratio of 65 : 35, molding the mixture into a cylindrical form, and calcining the molded product at 900°C. A film was formed as a fuel electrode catalyst layer for fuel electrode reaction acceleration on the fuel electrode support by coating a slurry of a mixture composed of NiO and GDC10 (10mol% Gd₂O₃-90mol% CeO₂) at a weight ratio of 50 : 50. Further, LDC40 (40mol% La₂O₃-60mol% CeO₂) and LSGM having a composition of La_{0.8}Sr_{0.2}Ga_{0.8}Mg_{0.2}O₃ were successively stacked on the fuel electrode reaction catalyst layer by slurry coating to form an electrolyte layer. The molded product was calcined at 1300°C. An air electrode material was slurry-coated on the electrolyte layer, and the coating was calcined at 1050°C to prepare a solid oxide fuel battery. La_{0.6}Sr_{0.4}Co_{0.2}Fe_{0.8}O₃ (hereinafter abbreviated to LSCF) was used as an air electrode (Table 1). Air electrodes having mutually different surface roughnesses Ra were obtained by varying the particle diameter of the LSCF starting material or by varying the calcination temperature of LSCF. Cells using Sm_{0.5}Sr_{0.5}CoO₃ (hereinafter abbreviated to SSC) were prepared (Table 2). In this case as well, air electrodes having mutually different surface roughnesses Ra were obtained by varying the particle diameter of the SSC starting material or by varying the calcination temperature of SSC.

For the solid oxide fuel battery cells thus prepared, the fuel electrode support had an outer diameter of 10 mm, a wall thickness of 1 mm, the fuel electrode reaction catalyst layer had a thickness of 20 µm, the LDC layer had a thickness of 10 µm, the LSGM layer had a thickness of 30 µm, the air electrode had a thickness of 20 µm, and the air electrode had an area of 35 cm².

A current collector layer was then formed by coating the following coating liquid on the air electrode. A coating liquid containing a resin, a solvent, a metal powder, and an oxide powder was provided. Specifically, a urethane resin was used as the resin, a mixed solvent composed of n-methyl-2-pyrrolidone (NMP) and benzyl alcohol at a ratio of 50 : 50 was provided as the solvent, a silver powder and a palladium powder were provided as the metal powder (conductive metal), and a La_{0.6}Sr_{0.4}Co_{0.2}Fe_{0.8}O₃ (LSCF) powder and a Sm_{0.5}Sr_{0.5}CoO₃ (SSC) powder that were identical to the powders used in the air electrode materials were provided as the oxide powder. For cells using LSCF in the air electrode, LSCF was used as the oxide powder (Table 1), and, for cells using SSC in the air electrode, SSC was used as the oxide powder (Table 2). Individual materials were weighed to % by mass specified in the table below when the total amount of the metal powder and the oxide powder was presumed to be 100% by weight. The tap density of the silver powder used was as shown in the table below. The resin, the solvent, the metal powder, and the oxide powder were mixed while stirring. For sample Nos. 29 and 58 in the table, in addition to the resin, the solvent, the metal powder, and the oxide powder, 40% by weight, based on the metal powder, of carbon particles as a pore forming material was added to prepare a coating liquid.

The coating liquids were spray-coated on the solid oxide fuel battery cells. The coating was dried at 80°C for 30 min. The solid oxide fuel battery cells were then allowed to cool at room temperature, followed by sintering at a temperature specified in the table for one hr to obtain solid oxide fuel battery cells with a current collector layer formed on the outer side of the air electrode. The current collector layer was a film including silver, palladium, and LSCF.

The fuel battery cells thus obtained were subjected to the above power generation test, power generation durability evaluation, and adhesion evaluation. The results were as shown in the table below.

**[Table 1]**

| Example | Sliver (wt%) | LSCF (wt%) | Palladium (wt%) | Baking temp. (°C) | Total contact distance per unit length 100µm (µm) | Mean porosity of current collecting layer in its portion near boundary between current collecting layer and air electrode layer (%) | Mean porosity of current collecting layer in its portion other than the near-boundary portion (%) | Tap density of silver starting material powder (g/cm²) | Surface area of air electrode. Ra (µm) | Carbon particles (wt%) | Adhesion after baking | Initial power generation performance [V] | Durability Potential lowering [%/1Kh] |
|---|---|---|---|---|---|---|---|---|---|---|---|---|---|
| 1 | 97.0 | 1.0 | 2.0 | 700 | 19 | 78 | 76 | 0.5 | 0.15 | - | × (5/5) | - | - |
| 2 | 97.0 | 1.0 | 2.0 | 700 | 34 | 60 | 61 | 1.0 | 0.15 | - | ⊚(0/5) | 0.839 | 0.30 |
| 3 | 97.0 | 1.0 | 2.0 | 700 | 44 | 51 | 58 | 2.0 | 0.15 | - | ⊚(0/5) | 0.840 | 0.35 |
| 4 | 97.0 | 1.0 | 2.0 | 700 | 58 | 37 | 57 | 3.1 | 0.15 | - | ⊚(0/5) | 0.843 | 0.43 |
| 5 | 97.0 | 1.0 | 2.0 | 700 | 75 | 29 | 57 | 4.0 | 0.15 | - | ⊚(0/5) | 0.845 | 0.54 |
| 6 | 97.0 | 1.0 | 2.0 | 700 | 92 | 8 | 56 | 5.0 | 0.15 | - | ⊚(0/5) | 0.847 | 2.34 |
| 7 | 97.0 | 1.0 | 2.0 | 500 | 18 | 77 | 76 | 2.0 | 0.15 | - | × (5/5) | - | - |
| 8 | 97.0 | 1.0 | 2.0 | 600 | 33 | 54 | 55 | 2.0 | 0.15 | - | ⊚(0/5) | 0.843 | 0.43 |
| 9 | 97.0 | 1.0 | 2.0 | 800 | 40 | 52 | 52 | 2.0 | 0.15 | - | ⊚(0/5) | 0.845 | 0.38 |
| 10 | 97.0 | 1.0 | 2.0 | 850 | 44 | 51 | 52 | 2.0 | 0.15 | - | ⊚(0/5) | 0.851 | 0.28 |
| 11 | 97.0 | 1.0 | 2.0 | 900 | 60 | 40 | 37 | 2.0 | 0.15 | - | ⊚(0/5) | 0.838 | 0.49 |
| 12 | 97.0 | 1.0 | 2.0 | 930 | 90 | 8 | 18 | 2.0 | 0.15 | - | ⊚(0/5) | 0.828 | 2.02 |
| 13 | 97.5 | 0.5 | 2.0 | 700 | 45 | 60 | 60 | 2.0 | 0.15 | - | ⊚(0/5) | 0.851 | 0.43 |
| 14 | 94.0 | 4.0 | 2.0 | 700 | 38 | 59 | 58 | 2.0 | 0.15 | - | ⊚(0/5) | 0.832 | 0.63 |
| 15 | 92.0 | 6.0 | 2.0 | 700 | 32 | 61 | 62 | 2.0 | 0.15 | - | ⊚(0/5) | 0.828 | 0.73 |
| 16 | 90.0 | 8.0 | 2.0 | 700 | 27 | 68 | 69 | 2.0 | 0.15 | - | ⊚(0/5) | 0.810 | 0.79 |
| 17 | 88.0 | 10.0 | 2.0 | 700 | 17 | 70 | 70 | 2.0 | 0.15 | - | ○(2/5) | 0.797 | 0.98 |
| 18 | 98.8 | 1.0 | 0.2 | 700 | 42 | 62 | 62 | 2.0 | 0.15 | - | ○(2/5) | 0.838 | 0.82 |
| 19 | 98.5 | 1.0 | 0.5 | 700 | 39 | 61 | 61 | 2.0 | 0.15 | - | ○(1/5) | 0.839 | 0.79 |
| 20 | 98.0 | 1.0 | 1.0 | 700 | 38 | 60 | 61 | 2.0 | 0.15 | - | ⊚(0/5) | 0.842 | 0.63 |
| 21 | 97.5 | 1.0 | 1.5 | 700 | 36 | 58 | 60 | 2.0 | 0.15 | - | ⊚(0/5) | 0.849 | 0.41 |
| 22 | 94.0 | 1.0 | 5.0 | 700 | 43 | 51 | 52 | 2.0 | 0.15 | - | ⊚(0/5) | 0.832 | 0.68 |
| 23 | 89.0 | 1.0 | 10.0 | 700 | 44 | 50 | 51 | 2.0 | 0.15 | | ⊚(0/5) | 0.782 | 0.99 |
| 24 | 97.0 | 1.0 | 2.0 | 700 | 46 | 52 | 52 | 2.0 | 0.50 | - | ⊚(0/5) | 0.832 | 0.45 |
| 25 | 97.0 | 1.0 | 2.0 | 700 | 45 | 50 | 51 | 2.0 | 0.30 | - | ⊚(0/5) | 0.841 | 0.37 |
| 26 | 97.0 | 1.0 | 2.0 | 700 | 40 | 50 | 51 | 2.0 | 0.15 | - | ⊚(0/5) | 0.848 | 0.29 |
| 27 | 97.0 | 1.0 | 2.0 | 700 | 38 | 50 | 51 | 2.0 | 0.12 | - | ○(1/5) | 0.840 | 0.29 |
| 28 | 97.0 | 1.0 | 2.0 | 700 | 18 | 50 | 51 | 2.0 | 0.10 | - | ○(3/5) | 0.793 | 0.95 |
| 29 | 97.0 | 1.0 | 2.0 | 700 | 55 | 52 | 58 | 5.0 | 0.15 | 40 | ⊚(0/5) | 0.812 | 0.87 |

**[Table 2]**

| Example | Sliver (wt%) | SSC (wt%) | Palladium (wt%) | Baking temp. (°C) | Total contact distance per unit length 100µm (µm) | Mean porosity of current collecting layer in its portion near boundary between current collecting layer and air electrode layer 00 | Mean porosity of current collecting layer in its portion other than the near-boundary portion 00 | Tap density of sliver starting material powder (g/cm²) | Surface area of air electrode Ra (µm) | Carbon particles (wt%) | Adhesion after baking | Initial power generation performance | Durability potential lowering [%/1Kh] |
|---|---|---|---|---|---|---|---|---|---|---|---|---|---|
| 30 | 97.0 | 1.0 | 2.0 | 700 | 16 | 76 | 76 | 0.5 | 0.15 | - | ×(5/5) | - | - |
| 31 | 97.0 | 1.0 | 2.0 | 700 | 30 | 59 | 59 | 1.0 | 0.15 | - | ⊚(0/5) | 0.805 | 0.29 |
| 32 | 97.0 | 1.0 | 2.0 | 700 | 42 | 50 | 58 | 2.0 | 0.15 | - | ⊚(0/5) | 0.806 | 0.34 |
| 33 | 97.0 | 1.0 | 2.0 | 700 | 56 | 36 | 56 | 3.1 | 0.15 | - | ⊚(0/5) | .809 | 0.41 |
| 34 | 97.0 | 1.0 | 2.0 | 700 | 72 | 27 | 55 | 4.0 | 0.15 | - | ⊚(0/5) | 0.811 | 0.52 |
| 35 | 97.0 | 1.0 | 2.0 | 700 | 88 | 8 | 54 | 5.0 | 0.15 | - | ⊚(0/5) | 0.813 | 2.2 |
| 36 | 97.0 | 1.0 | 2.0 | 500 | 17 | 76 | 76 | 2.0 | 0.15 | - | ×(5/5) | - | - |
| 37 | 97.0 | 1.0 | 2.0 | 600 | 32 | 53 | 53 | 2.0 | 0.15 | - | ⊚(0/5) | 0.809 | 0.41 |
| 38 | 97.0 | 1.0 | 2.0 | 800 | 39 | 51 | 50 | 2.0 | 0.15 | - | ⊚(0/5) | 0.811 | 0.36 |
| 39 | 97.0 | 1.0 | 2.0 | 850 | 42 | 50 | 50 | 2.0 | 0.15 | - | ⊚(0/5) | 0.817 | 0.27 |
| 40 | 97.0 | 1.0 | 2.0 | 900 | 57 | 39 | 35 | 2.0 | 0.15 | - | ⊚(0/5) | 0.804 | 0.47 |
| 41 | 97.0 | 1.0 | 2.0 | 930 | 86 | 9 | 19 | 2.0 | 0.15 | - | ⊚(0/5) | 0.802 | 2.14 |
| 42 | 97.5 | 0.5 | 2.0 | 700 | 43 | 59 | 58 | 2.0 | 0.15 | - | ⊚(0/5) | 0.817 | 0.41 |
| 43 | 94.0 | 4.0 | 2.0 | 700 | 36 | 58 | 56 | 2.0 | 0.15 | - | ⊚(0/5) | 0.801 | 0.60 |
| 44 | 92.0 | 6.0 | 2.0 | 700 | 31 | 60 | 60 | 2.0 | 0.15 | - | ⊚(0/5) | 0.800 | 0.70 |
| 45 | 90.0 | 8.0 | 2.0 | 700 | 26 | 72 | 68 | 2.0 | 0.15 | - | ⊚(0/5) | 0.801 | 0.76 |
| 46 | 88.0 | 10.0 | 2.0 | 700 | 16 | 72 | 70 | 2.0 | 0.15 | - | ○(2/5) | 0.786 | 0.97 |
| 47 | 98.8 | 1.0 | 2.0 | 700 | 40 | 61 | 60 | 2.0 | 0.15 | - | ○(2/5) | 0.804 | 0.79 |
| 48 | 98.5 | 1.0 | 0.5 | 700 | 37 | 60 | 59 | 2.0 | 0.15 | - | ○(1/5) | 0.806 | 0.76 |
| 49 | 98.0 | 1.0 | 1.0 | 700 | 36 | 59 | 59 | 2.0 | 0.15 | - | ⊚(0/5) | 0.808 | 0.60 |
| 50 | 97.5 | 1.0 | 1.5 | 700 | 35 | 57 | 58 | 2.0 | 0.15 | - | ⊚(0/5) | 0.815 | 0.39 |
| 51 | 94.0 | 1.0 | 5.0 | 700 | 41 | 50 | 50 | 2.0 | 0.15 | - | ⊚(0/5) | 0.799 | 0.65 |
| 52 | 89.0 | 1.0 | 10.0 | 700 | 42 | 48 | 49 | 2.0 | 0.15 | | ⊚(0/5) | 0.780 | 0.99 |
| 53 | 97.0 | 1.0 | 2.0 | 700 | 44 | 51 | 50 | 2.0 | 0.50 | - | ⊚(0/5) | 0.800 | 0.43 |
| 54 | 97.0 | 1.0 | 2.0 | 700 | 43 | 49 | 49 | 2.0 | 0.30 | - | ⊚(0/5) | 0.807 | 0.36 |
| 55 | 97.0 | 1.0 | 2.0 | 700 | 43 | 49 | 49 | 2.0 | 0.15 | - | ⊚(0/5) | 0.814 | 0.28 |
| 56 | 97.0 | 1.0 | 2.0 | 700 | 36 | 49 | 49 | 2.0 | 0.12 | - | ○(1/5) | 0.806 | 0.28 |
| 57 | 97.0 | 1.0 | 2.0 | 700 | 17 | 49 | 49 | 2.0 | 0.10 | - | ○(3/5) | 0.790 | 0.99 |
| 58 | 97.0 | 1.0 | 2.0 | 700 | 53 | 54 | 58 | 5.0 | 0.15 | 40 | ⊚(0/5) | 0.804 | 0.84 |

## Claims

1. A solid oxide fuel battery cell comprising a solid electrolyte, a fuel electrode layer provided on one surface of the solid electrolyte, an air electrode layer provided on the other surface of the solid electrolyte, and a current collector layer provided on the surface of the air electrode layer, wherein
the air electrode layer comprises an oxide which is selected from the group consisting of lanthanum ferrite perovskite oxides, lanthanum cobalt perovskite oxides, and samarium cobalt perovskite oxides, and
the current collector layer is a porous layer comprising silver, palladium and an oxide wherein the current collector layer has, in a portion other than a portion near a boundary between the current collector layer and the air electrode layer, an average porosity of 20% to 70% and has, in the near-boundary portion, an average porosity which is 50% or more of the value of said average porosity.

2. The solid oxide fuel battery cell according to claim 1, wherein the current collector layer in its portion near the boundary between the current collector layer and the air electrode layer has an average porosity of 70% or more of the value of the average porosity of the portion other than the near-boundary portion.

3. The solid oxide fuel battery cell according to claim 2, wherein the average porosity of the current collector layer in its portion near the boundary between the current collector layer and the air electrode layer is measured in a portion of at least 5 µm of the current collector layer in terms of thickness from the boundary between the current collector layer and the air electrode layer.

4. The solid oxide fuel battery cell according to claim 3, wherein the current collector layer is in contact with the air electrode layer at a boundary between the current collector layer and the air electrode layer over a distance of 20 µm to 85 µm per 100 µm of unit length.

5. The solid oxide fuel battery cell according to claim 4, wherein the surface of the air electrode layer in its portion in contact with the current collector layer has a surface roughness Ra of not less than 0.12 µm.

6. The solid oxide fuel battery cell according to any one of claims 1 to 5, wherein the oxide is selected from the group consisting of lanthanum ferrite perovskite oxides, lanthanum cobalt perovskite oxides, and samarium cobalt perovskite oxides.

7. The solid oxide fuel battery cell according to any one of claims 1 to 6, wherein the content of the oxide in the current collector layer is more than 0.1 % by mass to less than 10% by mass.

8. The solid oxide fuel battery cell according to any one of claims 1 to 7, wherein the content of palladium is more than 0.1 % by mass to less than 10% by mass.

9. The solid oxide fuel battery cell according to any one of claims 1 to 8, wherein the current collector layer has been obtained by sintering a silver powder or a silver palladium alloy powder having a tap density of 1.0 to less than 5.0 g/cm³.

10. A fuel battery system comprising a solid oxide fuel battery cell according to any one of claims 1 to 9.

11. A method for manufacturing a solid oxide fuel battery cell according to any one of claims 1 to 10, the method comprising:
providing a solid oxide fuel battery cell comprising a solid electrolyte, a fuel electrode layer provided on one surface side of the solid electrolyte, and an air electrode layer provided on the other surface side of the solid electrode; and
coating the air electrode layer with a mixture containing a silver powder and a palladium powder and/or a powder of an alloy of silver with palladium, and an oxide, and optionally a pore forming agent that disappears in the course of a sintering process and then sintering the coating,
the silver powder or the silver-palladium alloy powder having a tap density of 1.0 to 5.0 g/cm³.

12. A method for manufacturing a solid oxide fuel battery cell according to claim 11, wherein the sintering process is carried out at a temperature of 600°C to 900°C.
